# EUROPÄISCHE PATENTSCHRIFT

(11) **EP 1 584 184 B1**
(45) Veröffentlichungstag und Bekanntmachung des Hinweises auf die Patenterteilung: **29.07.2009**
(21) Anmeldenummer: 03810837.9
(22) Anmeldetag: 30.12.2003
(51) Int. Cl.: H04N 5/222

(54) **VERFAHREN ZUM VERARBEITEN VON AUS EINEM FILMAUFNAHMESTRAHLENGANG EINER LAUFBILDKAMERA ABGEZWEIGTEN FILMBILDERN**
METHOD FOR PROCESSING FILM IMAGES WHICH ARE DEVIATED FROM THE FILM RECORDING OPTICAL PATH OF A MOVING PICTURE CAMERA
PROCEDE DE TRAITEMENT D'IMAGES CINEMATOGRAPHIQUES DEVIEES DU TRAJET OPTIQUE DE PRISE DE VUES D'UNE CAMERA CINEMATOGRAPHIQUE

(30) Priorität: 13.01.2003 DE 10301714
(43) Veröffentlichungstag der Anmeldung: 12.10.2005
(73) Patentinhaber: ARNOLD & RICHTER CINE TECHNIK GMBH & CO. BETRIEBS KG, 80799 München (DE)
(72) Erfinder: JACUMET, Klaus, 80995 München (DE)
(74) Vertreter: Ninnemann, Detlef
(86) Internationale Anmeldenummer: PCT/DE2003/004298
(87) Internationale Veröffentlichungsnummer: WO 2004/064389

(56) Entgegenhaltungen:
- EP-A- 0 963 113
- WO-A-98/51075
- WO-A-99/65238
- US-A- 5 946 445
- US-B1- 6 353 461
- NOURI S: "PROFESSIONAL DV - EIN WELSTANDARD IM EINSATZ" FERNSEH UND KINOTECHNIK, VDE VERLAG GMBH. BERLIN, DE, Bd. 55, Nr. 10, Oktober 2001 (2001-10), Seiten 612-616, XP001101099 ISSN: 0015-0142
- "Product Specification Sheet" CINECORDER-NX, [Online] 1. Juni 2000 (2000-06-01), Seiten 1-3, XP002286937 Gefunden im Internet: URL:www.videoassist.com> [gefunden am 2004-06-30]
- "Product Specification Sheet" CINELOG 3.0, [Online] 12. März 1999 (1999-03-12), Seiten 1-8, XP002286938 Gefunden im Internet: URL:www.videoassist.com> [gefunden am 2004-06-30]

## Beschreibung

Die Erfindung betrifft ein Verfahren zum Verarbeiten von aus einem Filmaufnahmestrahlengang einer Laufbildkamera abgezweigten Filmbildern gemäß dem Oberbegriff des Anspruchs 1 sowie eine Vorrichtung zur Durchführung des Verfahrens.

Der US 5,946,445 ist ein Verfahren zum Verarbeiten von Filmbildern zu entnehmen, die aus einem Filmaufnahmestrahlengang einer Laufbildkamera abgezweigt werden. Die Verarbeitung der Filmbilder erfolgt in einem optoelektronischen Wandler, der in einem in Abhängigkeit von der Bildaufnahmefrequenz der Laufbildkamera periodisch unterbrochenen optischen Strahlengang der Laufbildkamera angeordnet ist und der die Filmbilder in analoge Assistsignale umwandelt. Die analogen Assistsignale werden jedoch nicht mit einer mit der Bildaufnahmefrequenz der Laufbildkamera übereinstimmenden Bildfrequenz an eine Datenverarbeitungseinrichtung abgegeben, sondern mit einer festen Videofrequenz von 50 (PAL) oder 60 (NTSC) Videohalbbildem pro Sekunde als analoges Videosignal an den Eingang der Datenverarbeitungseinrichtung angelegt.

Aus der EP 0 963 113 A ist ein Videoassistsystem mit einem integrierten Normenwandler für Videobilder zum Umwandeln der Videonorm des von einem CCD-Sensor abgegebe nen digitalen Videosignals bekannt, der einen Speicher zum Speichern des digitalen Videosignals, einen Adressgenerator zur Erzeugung von Speicheradressen und einen Interpolator zum Interpolieren der an den erzeugten Speicheraddressen abgespeicherten Daten enthält und der nach der Normenwandlung ein serielles digitales Videosignal mit einer Standardvideobildfrequenz abgibt.

Aus der US-A-4,928,171 ist eine Videoeinrichtung für eine Laufbildkamera bekannt, bei der ein Videobildsensor in einem optischen Strahlengang der Laufbildkamera angeordnet ist, der in Abhängigkeit von der Bildaufnahmefrequenz der Laufbildkamera periodisch unterbrochen wird. Eine derartige Videoeinrichtung dient dazu, parallel zur Belichtung von Filmbildern des Laufbildfilmes ein Videobild zu erzeugen, das zum einen während der Filmaufnahme eine Bildbetrachtung unabhängig vom Einblick in den Kamerasucher ermöglicht und zum anderen die Nachbearbeitung des belichteten Laufbildfilmes anhand der aufgezeichneten Videosequenzen zu erleichtern.

Zu diesem Zweck wird ein Teil des Aufnahmestrahlengangs der Laufbildkamera in einen Videostrahlengang abgezweigt und einem Videobildsensor oder einer Videokamera zugeleitet. Dabei entwirft das Aufnahmeobjektiv der Laufbildkamera ein Bild in der Bild ebene des intermittierend beispielsweise mit einer Filmtransportgeschwindigkeit von 24 Bildern pro Sekunde bewegten Laufbildfilmes, wenn eine im Aufnahmestrahlengang der Laufbildkamera hinter dem Aufnahmeobjektiv angeordnete rotierende Spiegelblende den Aufnahmestrahlengang während der Belichtung eines Filmbildes freigibt. In der Zeit, in der der Laufbildfilm um eine Filmbildteilung weiter transportiert wird, verdeckt die bewegliche Spielgelblende den Aufnahmestrahlengang zur Bildebene und lenkt das Filmbild auf die Ebene einer Mattscheibe oder Faserplatte, von der das dort entstehende Bild über eine Videooptik auf einem Videobildsensor abgebildet wird.

Der Videobildsensor integriert das auf seine lichtempfindliche Schicht fallende Licht des Videostrahlengangs. Die integrierten Signale werden periodisch aus dem Videobildsensor ausgelesen und als Videoausgangssignale auf einem Videomonitor dargestellt oder auf einem geeigneten Speichermedium gespeichert.

Zwischen der Mattscheibe oder Faserplatte und der Videooptik befindet sich mindestens ein weiterer Strahlenteiler, der das Bild der Mattscheibe oder Faserplatte zu einem Okular abzweigt, über das ein Kameramann das Filmbild auf der Mattscheibe betrachten kann.

Infolge der periodischen Unterbrechung des Aufnahmestrahlengangs der Laufbildkamera in Abhängigkeit von der Bildaufnahmefrequenz der Laufbildkamera trifft somit während der Filmbelichtung kein Licht auf den Videobildsensor, was von Sonderfällen abgesehen zu einem Bildflimmern des mit dem Videoausgangssignal des Videobildsensors erzeugbaren Videobildes führt. Dieses Bildflimmern wird noch dadurch verstärkt, dass die zur Aufladung eines Bildpunktes des Ladungsbildes des Videobildsensors wirksame Zeit zwischen dem letzten löschenden Auslesen und dem nächsten löschenden Auslesen des Ladungsbildes des Videobildsensors durch von Bild zu Bild wechselnde Zeitintervalle verkürzt wird, während denen der Videostrahlengang zum Videobildsensor unterbrochen ist.

Dadurch ist die jeweilige Zeitspanne wirksamer Belichtung für einen Bildpunkt des Ladungsbildes des Videobildsensors zwischen einem löschenden Auslesen des Ladungsbildes zum Erzeugen des Videoausgangssignals und dem nächsten löschenden Auslesen des Ladungsbildes zum Erzeugen des nächsten Videoausgangssignales von Bild zu Bild unterschiedlich lang, da die übliche Bildaufnahmefrequenz einer Laufbildkamera nur in Ausnahmefällen mit der Videofrequenz der Videoeinrichtung übereinstimmt. So beträgt beispielsweise die Bildaufnahmefrequenz einer Laufbildkamera üblicherweise 24 Bilder pro Sekunde, während die Videofrequenz einer Videoeinrichtung bei einem PAL-System 50 Bilder pro Sekunde und bei einem NTSC-System bei 60 Bildern pro Sekunde beträgt. Dieses Bildflimmern wirkt sich in einer Hell/Dunkel-Änderung eines Videobildes oder Videohalbbildes zum jeweils nächsten aus, was die Videobildbetrachtung erschwert bzw. unmöglich macht.

Zur Beseitigung bzw. Reduzierung dieses Bildflimmems ist es aus der US-A-4,928,171 bekannt, den Videobildsensor nur dann lichtempfindlich zu steuern, wenn Licht im Videostrahlengang zu Verfügung steht. Dadurch wird der Videobildsensor bezüglich der Videofrequenz und Phasenlage an die Laufbildkamera gekoppelt. Um daraus wieder normgerechte Videosignale mit 25 (PAL-System) oder 30 Bildern pro Sekunde (NTSC-System) zu erhalten, werden die Videosignale des Videobildsensors bzw. der damit verbundenen Videokamera in der Frequenz des Videobildsensors zwischengespeichert und aus dem Zwischenspeicher mit der normgerechten Videosignalfrequenz ausgelesen.

Unabhängig von der Filmtransportgeschwindigkeit bzw. Bildaufnahmefrequenz der Laufbildkamera entspricht somit das Videoausgangssignal der bekannten Videoeinrichtung der normgerechten Videobildfrequenz und wird am Ausgang der Videoeinrichtung in Form eines FBAS-Signals (Farbart-, Bildinhalt-, Austast- und Synchronisier-Signal) zur Anzeige auf einem Videomonitor oder zur Videosignalspeicherung zu Verfügung gestellt.

Ein wesentlicher Nachteil dieses starren Video Assist Systems besteht darin, dass durch die Erzeugung und Abgabe normgerechter Videobilder auf die Besonderheiten eines Laufbildfilms nicht eingegangen wird. Dies führt zu Problemen bei der Nachbearbeitung des Laufbildfilmes und zum Verzicht auf besondere Effekte, die mit dem Laufbildfilm erzeugt, aber mit der Videoeinrichtung aus den folgenden Gründen nicht dargestellt werden können.

Da die Standard-Bildaufnahmefrequenz einer Laufbildkamera 24 Bilder/s beträgt, sind für die Nachbearbeitung eines Laufbildfilmes und insbesondere für den Filmschnitt bereits Schnittcomputer bekannt, die mit einer zeitlichen Auflösung von 24 Bildern pro Sekunde arbeiten, so dass bei einem Einsatz einer Videoaufzeichnung zur Erleichterung der Nachbearbeitung des Laufbildfilmes zunächst das Videosignal in Abhängigkeit vom jeweiligen System (PAL oder NTSC) mit einer Videofrequenz von 25 oder 30 Videobildern pro Sekunde auf die Bildaufnahmefrequenz der Laufbildkamera von 24 Bildern pro Sekunde konvertiert werden muß.

Des weiteren ermöglicht die starre, normgerechte Videobildfrequenz nicht die Wiedergabe von Zeitlupen- oder Zeitraffer-Effekten eines Laufbildfilmes, der mit einer von der Standard-Bildaufnahmefrequenz abweichenden Bildaufnahmefrequenz belichtet wurde. Dabei wird die Laufbildkamera zur Erzeugung eines Zeitlupeneffektes mit einer höheren Transportgeschwindigkeit oder zur Erzeugung eines Zeitraffereffektes mit einer niedrigeren Filmtransportgeschwindigkeit als der Standard-Filmtransportgeschwindigkeit bzw. Bildaufnahmefrequenz bewegt. Wird der Laufbildfilm bei der Projektion wieder mit der normalen Standard-Bildaufnahmefrequenz von 24 Bildern pro Sekunde bewegt, so werden die entsprechenden Zeitlupen- und Zeitraffer-Effekte realisiert. Diese Effekte können wegen der starren, normgerechten Videobildfrequenz nur unzureichend dargestellt werden.

Es sind zwar Verfahren bekannt, diese Effekte elektronisch nachzuvollziehen, aber alle Ansätze führen zu einer unsauberen, holpernden Bewegungsauflösung.

Weiterhin begründet die Tatsache, dass nur zur Hälfte eines gesamten Filmbildzyklus Licht im Sucher und somit auf dem Videosensor vorhanden ist, eine Halbbildauflösung im Videoausgangssignal. Üblicherweise wird immer ein Odd- oder ein Even-Halbbild richtig belichtet, das andere Halbbild wird zu der Zeit belichtet, in der der Sensor kein Licht erhält. Um aber ein Videobild zu erhalten, das eben nicht die störenden Hell/Dunkel Folgen zeigt, wird der Inhalt der unbelichteten Halbbilder durch den Inhalt der vorher belichteten Halbbilder ersetzt. Dabei verliert man zwangsläufig die Information, die bei nicht unterbrochener Belichtung im zweiten Halbbild stehen würde.

Aufgabe der vorliegenden Erfindung ist es, ein Verfahren zum Verarbeiten von aus einem Filmaufnahmestrahlengang einer Laufbildkamera abgezweigten Filmbildern anzugeben, das an die Besonderheiten einer Laufbildkamera angepasst ist und insbesondere eine einwandfreie Darstellung von mit einem Laufbildfilm erzeugten Spezialeffekten wie Zeitlupen- und Zeitraffer-Aufnahmen gewährleistet.

Diese Aufgabe wird erfindungsgemäß durch ein Verfahren mit den Merkmalen des Anspruchs 1 gelöst.

Die erfindungsgemäße Lösung gewährleistet ein an die Besonderheiten einer Laufbildkamera angepasstes Verarbeiten von aus einem Filmaufnahmestrahlengang einer Laufbildkamera abgezweigten Filmbildern und ermöglicht insbesondere die einwandfreie Darstellung von mit einem Laufbildfilm erzeugten Spezialeffekten wie Zeitlupen- und Zeitraffer-Aufnahmen, insbesondere unter Beibehaltung einer Vollbildauflösung.

Die erfindungsgemäße Lösung geht von der Überlegung aus, abweichend von den bekannten Verfahren zur normgerechten Aufbereitung von Videosignalen zur flimmerfreien Darstellung von Videobildern oder Video-Halbbildern parallel zu jedem Filmbild ein elektronisches, vorzugsweise digitales Assistbild auszugeben. Da dieses Verfahren mit den Standards für Videobildsignale bricht, muss das dieses Verfahren realisierende Format ein spezielles, vorzugsweise ein digitales Format sein. Da dieses Format aber nicht auf handelsüblichen Videorecordern oder Videomonitoren dargestellt werden kann, wird das digitale Assistsignal an eine Datenverarbeitungseinrichtung abgegeben, in der bzw. von der das elektronische Assistbild auf einem Monitor dargestellt oder gespeichert wird. Dadurch wird es möglich, elektronische Assistbilder zum Beispiel mit 35 Bildern pro Sekunde, d.h. als leichte Zeitlupe an die Datenverarbeitungseinrichtung zu übertragen. Dort werden die Assistbilder zunächst in Echtzeit, also genau wie die von der Laufbildkamera aufgenommene Szene, dargestellt und/oder aufgezeichnet. Weiterhin kann die gespeicherte Szene dann erneut entweder wieder in Echtzeit oder unter der Annahme einer Betrachtungsgeschwindigkeit von beispielsweise 24 Bildern pro Sekunde je nach Aufnahmegeschwindigkeit als Zeitlupe oder Zeitraffer wiedergegeben werden.

Dementsprechend werden bei dem erfindungsgemässen Verfahren zum Verarbeiten von aus einem Filmaufnahmestrahlengang einer Laufbildkamera abgezweigten Filmbildern digitale Assistsignale mit einer mit der Bildaufnahmefrequenz der Laufbildkamera übereinstimmenden Bildfrequenz an eine Datenverarbeitungseinrichtung abgegeben, die aus den digitalen Assistsignalen gebildete Assistbilder mit der Bildaufnahmefrequenz der Laufbildkamera verarbeitet. Die Datenverarbeitungseinrichtung gibt die digitalen Assistsignale zur Anzeige der Assistbilder mit einer Assistbildfrequenz oder der Bildaufnahmefrequenz der Laufbildkamera an eine digitale Speichereinrichtung oder mit einer normierten Bildfrequenz, beispielsweise 24 Bildern pro Sekunde, an einen Monitor ab.

Optional können die Assistbilder aus der Datenverarbeitungseinrichtung heraus als digitale Videosignale, FBAS- oder Y/C-Signale an Anzeige- oder digitale oder analoge Speichereinrichtungen weitergegeben werden.

Eine vorteilhafte Variante des erfindungsgemäßen Verfahrens ist durch einen separaten, einem bisher bekannten Video-Assist entsprechenden Videozweig gekennzeichnet, in dem übliche Videosignale mit einer der Videonorm entsprechenden Videosignalfrequenz über eine genormte Schnittstelle an übliche Videogeräte z. B. Videomonitore und Videorekorder gesendet werden. In einem zweiten Signalpfad können die elektronischen Bildsignale bzw. digitalen Assistsignale mit einer mit der Bildaufnahmefrequenz der Laufbildkamera übereinstimmenden Bildfrequenz an die Datenverarbeitungseinrichtung abgegeben werden.

In dieser Ausgestaltung der Erfindung wird aus dem ersten Signalpfad ein FBAS, Y/C und DV-Signal mit 25 oder 30 vollen Assistbildem pro Sekunde über übliche Schnittstellen ausgegeben, während in dem zweiten Signalpfad ein elektronisches Assistbild pro Filmbild an die Datenverarbeitungseinrichtung ausgegeben wird, so dass sowohl ein flimmerfreier Standardbetrieb als auch eine auf die besonderen Eigenschaften und Möglichkeiten der Laufbildkamera abgestellte Betriebsart verwendet werden kann.

Wenn die Laufbildkamera mit einer Geschwindigkeit bzw. mit einer Bildaufnahmefrequenz läuft, die höher ist als die über die Schnittstelle zu übertragende Datenrate bzw. höher als die mit dem optoelektronischen Wandler realisierbare Geschwindigkeit, d.h. mit einer Geschwindigkeit von mehr als etwa 50 bis 60 Bildern pro Sekunde, so wird nur jedes zweite elektronische Assistbild zur Datenverarbeitungseinrichtung übertragen. In diesem Modus wird optional das Licht von zwei Durchgängen der Spiegelblende integriert. Dadurch erreicht man eine höhere Belichtung des optoelektronischen Wandlers. Da dieser Modus allerdings zwei Filmbilder zu einem elektronischen Assistbild zusammenfügt, ist dieser Modus abschaltbar, um die Eindeutigkeit der Zuordnung der Bilder zu erhalten.

Über einen Rückkanal auf dieser Schnittstelle können von der Datenverarbeitungseinrichtung Kamera- und Assiststeuerinformationen zur Laufbildkamera bzw. einer in die Laufbildkamera integrierten bzw. mit dieser verbundenen Kamera-Assisteinrichtung gesandt werden, während umgekehrt auf einem Meta-Datenkanal zusätzliche Aufnahme-, Steuer- oder Statussignale bzw. Daten wie beispielsweise Kamera-Status-Informationen zurück zur Datenverarbeitungseinrichtung geschickt werden können, so dass dadurch beispielsweise ein Modus entsteht, der die Assistbilder in der Datenverarbeitungseinrichtung automatisch aufzeichnet, wenn die Laufbildkamera läuft.

Weiterhin kann eine Einblendung von auswählbaren Steuer-, Status- und/oder Aufnahmedaten in das Bild für zusätzliche Informationen beispielsweise bei der Nachbearbeitung eines Laufbildfilmes vorgesehen werden. Die Einblendung kann entweder dem Bildinhalt überlagert werden, so dass er auch beim Abspeichern der Informationen aus der Datenverarbeitungseinrichtung heraus auf klassischen Videosystemen erhalten bleibt, oder neben dem eigentliche Bildinhalt auf freien Bereichen eines Monitors angezeigt werden. Da die Metadaten parallel zu den eigentlichen Assistbildern in der Datenverarbeitungseinrichtung gespeichert werden, können sie innerhalb dieser Einheit immer wieder, auch außerhalb des eigentlichen Bildbereiches, angezeigt werden.

Somit übernimmt die Datenverarbeitungseinrichtung die klar lesbare Einblendung wichtiger Daten in das Assistbild bzw. auf dem Assist-Monitor und kann die Daten als normgerechtes Videosignal z. B. an einen Videorecorder oder Videomonitor bzw. direkt per Dateikopierung, also nicht als Videosignal, an einen zur Nachbearbeitung des Laufbildfilmes vorgesehenen Schnittcomputer abgeben.

Eine bevorzugte Ausführungsform des erfindungsgemäßen Verfahrens ist dadurch gekennzeichnet, dass die Lichtverhältnissen im Assiststrahlengang der Laufbildkamera repräsentiert werden durch entsprechende Blendenindexsignale, die über eine Blendenindex-Signalaufbereitung an den optoelektronischen Wandler abgegeben werden, der in Abhängigkeit von den aufbereiteten Blendenindexsignalen in einem ersten Belichtungsmodus die Lichtmenge im Assiststrahlengang von einer Dunkelphase des Assiststrahlengangs bis zur nächsten Dunkelphase integriert, wobei die integrierte Lichtmenge nach dem Ende der Integration von einer Bildaufbereitungseinrichtung ausgelesen wird.

In einem zweiten Belichtungsmodus wird die Belichtungszeit des optoelektronischen Wandlers auf einen vorgebbaren Wert, vorzugsweise auf die Filmbelichtungszeit der Laufbildkamera eingestellt, die Lichtmenge des Assiststrahlengangs von einem Startwert in der Hellphase bis zu einem Endwert in dieser Hellphase integriert und die integrierten Lichtmenge nach dem Ende der Integration, die zeitlich dem vorgegebenen Wert entspricht, von der Bildaufbereitungseinrichtung ausgelesen. Dabei kann in einer bevorzugten Ausführungsform die Mitte der eingestellten Belichtungszeit des optoelektronischen Wandlers auf die Mitte der Hellphase im Assiststrahlengang eingestellt werden. Auch in diesem Modus ist bei einer Kameralaufgeschwindigkeit oberhalb der maximalen Frequenz des Assistsystems ein Zusammenfassen mehrerer Blendendurchgänge zu einem Assistbild vorgesehen.

Nach der Bilderfassung und Abgabe der digitalen Assistsignale durch den bzw. die optoelektronischen Wandler wird das digitale Assistbild errechnet, wobei bei einem einzelnen optoelektronischen Wandler die Farbmaske des optoelektronischen Wandlers dekodiert und bei mehreren optoelektronischen Wandler die Bilder der optoelektronischen Wandler miteinander kombiniert werden. Anschließend werden die Bilddaten der digitalen Assistbilder an eine Bildkomprimierungseinrichtung abgegeben, die die Bilddaten der digitalen Assistbilder komprimiert und über Leitungstreiber in Abhängigkeit von der Bildaufnahmefrequenz der Laufbildkamera an die Datenverarbeitungseinrichtung abgibt, die die Bilddaten der digitalen Assistbilder speichert, dekomprimiert und zur Anzeige auf einem externen oder internen Monitor gesteuert von einer Timing-Steuerung aufbereitet.

Noch vor der Komprimierung der Bilddaten besteht die Möglichkeit, einen Datenpfad für einen Monitor direkt aus der Kamera-Assisteinrichtung der Laufbildkamera auszukoppeln. Als Monitor dient dabei ein üblicher Computer Monitor mit VGA bzw. XVGA Eingang.

Der Signal- und Datenaustausch zwischen der Kamera-Assisteinrichtung und der Datenverarbeitungseinrichtung erfolgt vorzugsweise binär codiert, insbesondere als PCM-Signal (Pulse Code Modulation), wobei die Signale und Daten kabelgebunden, über Lichtwellenleiter oder Glasfasern, mittels eines Trägerfrequenzsystems oder über eine Infrarotschnittstelle übertragen werden.

Eine Vorrichtung zur Durchführung des Verfahrens ist durch eine Kamera-Assisteinrichtung mit einem auf den Assiststrahlengang gerichteten Bildsensor und eine Datenverarbeitungseinrichtung gekennzeichnet, die die von der Kamera-Assisteinrichtung mit einer mit der Bildaufnahmefrequenz der Laufbildkamera übereinstimmenden Bildfrequenz abgegebenen digitalen Assistsignale empfängt und die aus den digitalen Assistsignalen zusammengestellte digitale Assistbilder mit der Bildaufnahmefrequenz der Laufbildkamera verarbeitet.

Vorzugsweise ist die Datenverarbeitungseinrichtung mit einer digitalen Speichereinrichtung und/oder einem Monitor verbunden und besteht aus einem Personal Computer (PC) auf dessen Monitor die elektronischen Bilder betrachtet werden können.

Die Übertragung der elektronischen Bilder von der Assisteinrichtung zum Personal Computer kann insbesondere über eine Fire-Wire-Schnittstelle des Personal Computers erfolgen, so dass keine zusätzlichen Hardwareanforderungen für die Durchführung des erfindungsgemäßen Verfahrens zu erfüllen sind. Es sind aber speziell zur flexiblen Übertragung der elektronischen Bilder ohne fixe Bildfrequenzen ein eigenständiges Übertragungssysteme sinnvoll.

Als im Assiststrahlengang der Laufbildkamera angeordneter Bildsensor kann wahlweise ein CCD-Chip, ein C-MOS-Bildsensor oder eine Bildröhre eingesetzt werden, die insbesondere im Progressive-Scan-Betrieb arbeiten, obwohl der Einsatz eines Interlaced Chips ebenfalls grundsätzlich möglich ist.

Eine weitere vorteilhafte Ausgestaltung ist durch ein Eingabefeld für Betriebseinstellungen gekennzeichnet, die über graphisch dargestellte Bedienelemente der Kamera-Assisteinrichtung ausgeführt werden. An dem Eingabefeld können beispielsweise Vorgaben über die Signalverstärkung, die Farbeinstellung, der Belichtungsmodus und ggf. Einstellungen der Laufbildkamera vorgenommen werden. Über eine Rückleitung zur Kamera-Assisteinrichtung der Laufbildkamera werden die Daten an eine Steuerung der Kamera-Assisteinrichtung abgegeben, von wo sie auf den Bildsensor bzw. die Bildaufbereitung wirken oder über eine entsprechende Schnittstelle als Kamera-Steuersignale der Laufbildkamera zur Verfügung gestellt werden.

Anhand von in der Zeichnung dargestellten Ausführungsbeispielen soll der der Erfindung zugrundeliegende Gedanke näher erläutert werden. Es zeigen:
- Fig. 1: eine schematische Darstellung des Strahlengangs einer Laufbildkamera mit ei- ner rotierenden Spiegelblende und einer Kamera-Assisteinrichtung;
- Fig. 2: ein Blockschaltbild der Elektronik der Kamera-Assisteinrichtung und des bild- bearbeitenden Teils einer als Personal Computer ausgebildeten Datenver- arbeitungseinrichtung;
- Fig. 3: eine zeitliche Darstellung der Signale der Kamera-Assisteinrichtung in einem ersten Belichtungsmodus;
- Fig. 4: eine zeitliche Darstellung der Signale der Kamera-Assisteinrichtung in einem zweiten Belichtungsmodus und
- Fig. 5: ein Blockschaltbild der Elektronik der Kamera-Assisteinrichtung mit einem se- paraten Videozweig und des bildbearbeitenden Teils eines Personal Com- puters.

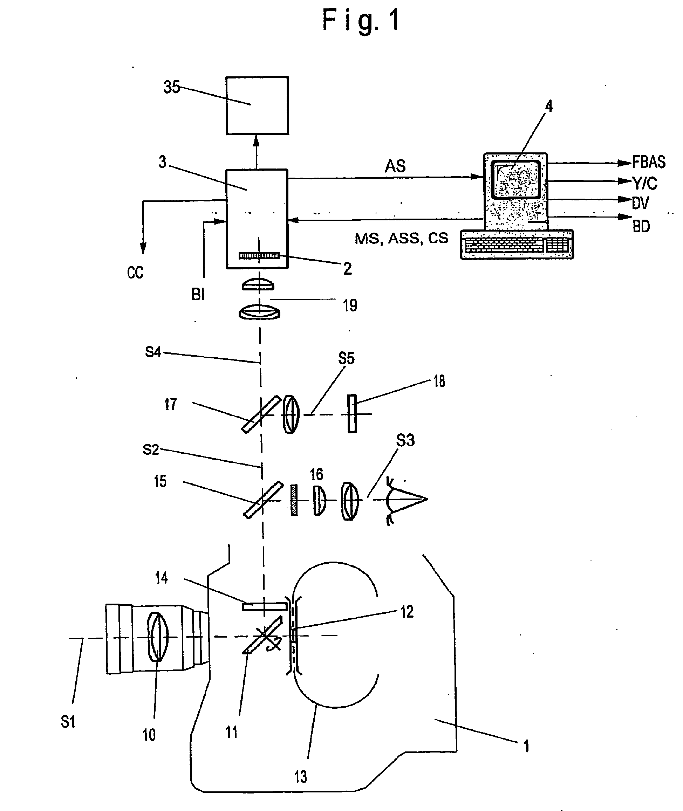

Das in Fig. 1 schematisch dargestellte optische System einer Laufbildkamera 1 mit einer Kamera-Assisteinrichtung 2, 3 zeigt ein Aufnahmeobjektiv 10, durch das ein Aufnahmestrahlengang S1 in die Laufbildkamera 1 eintritt und auf eine rotierende Spiegelblende 11 trifft. Die rotierende Spiegelblende 11 setzt sich üblicherweise aus einer halbkreisförmigen Spiegelfläche mit einem Umfangswinkel von üblicherweise 180° und einem koaxial zur Spiegelfläche angeordneten Blendenverstellflügel zusammen, der gegenüber der Spiegelfläche verstellbar ist, so dass Blendenöffnungswinkel von 0° bis 180° der rotierenden Spiegelblende 11 eingestellt werden können.

Je nach Winkelstellung der rotierenden Spiegelblende 11 trifft der Aufnahmestrahlengang S1 auf den Öffnungssektor (Hellsektor) der rotierenden Spiegelblende 11 und gelangt durch ein Bildfenster 12 auf einen in einem Filmkanal geführten Laufbildfilm 13. Während des Transports des Laufbildfilms 13 wird das Bildfenster 12 durch die Spiegelfläche der rotierenden Spiegelblende 11 abgedeckt und der Aufnahmestrahlengang S1 auf eine Mattscheibe oder Faserplatte 14 abgelenkt, von wo aus der Aufnahmestrahlengang S1 durch einen ersten Strahlteiler 15 gelangt, der von dem Aufnahmestrahlengang S1 einen Sucherstrahlengang S3 in ein Okular 16 abspaltet, durch das der Kameramann das Bild auf der Mattscheibe oder Faserplatte 14 betrachten kann.

Der durch den ersten Strahlenteiler 15 gelangende Strahlenteil S2 des Aufnahmestrahlenganges S1 gelangt möglicherweise noch auf einen zweiten Strahlteiler 17, der den Strahlenteil S2 in einen Belichtungsmesser-Strahlengang S5 für einen Belichtungsmesser 18 und einen Assiststrahlengang S4 aufteilt.

Der Assiststrahlengang S4 gelangt durch eine Assistoptik 19 zu der Kamera-Assisteinrichtung mit einem Bildsensor 2, der das optische Bild in Bildsignale umwandelt, und mit einer Assistelektronik 3, die aus den Bildsignalen digitale Signale erzeugt und die Assistsignale AS sowie gegebenenfalls weitere Steuersignale und Daten an einen Personal Computer 4 abgibt sowie Steuer- und Datensignale ASS, CS vom Personal Computer 4 empfängt.

Der Assistelektronik 3 wird weiterhin ein Mode-Select-Signal MS vom Personal Computer 4 zugeführt, das einen gewünschten Belichtungsmodus vorgibt, sowie ein Blendenindexsignal BI von der Camera, das den jeweiligen Belichtungsverhältnissen des Assiststrahlenganges S4 und damit den Belichtungsverhältnissen auf dem Bildsensor 2 entspricht. Weiterhin gibt die Assistelektronik 3 Kamera-Steuersignale CC an die Steuerelektronik der Laufbildkamera 1 ab.

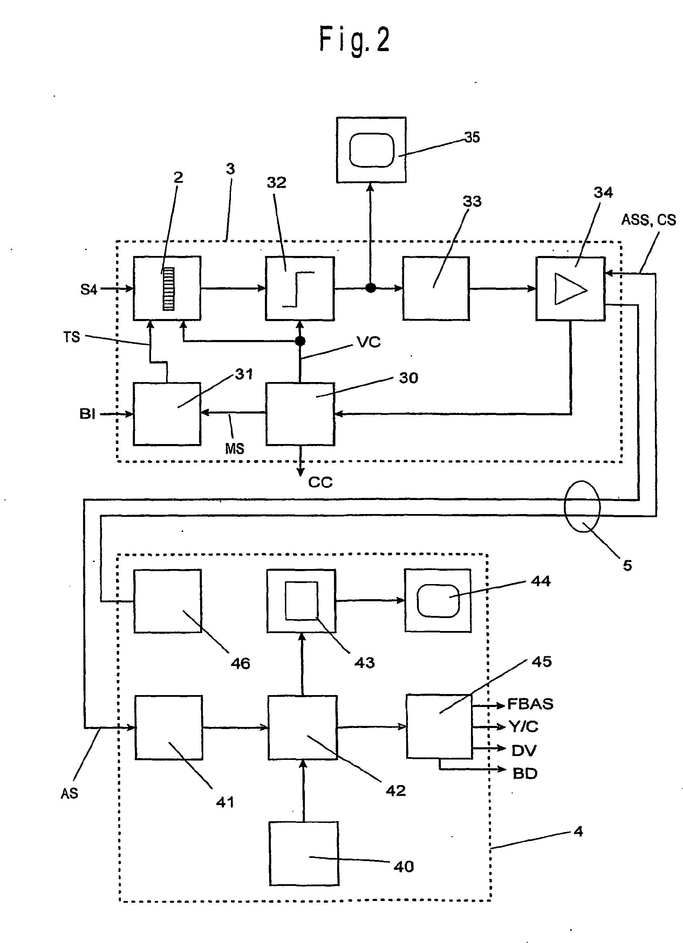

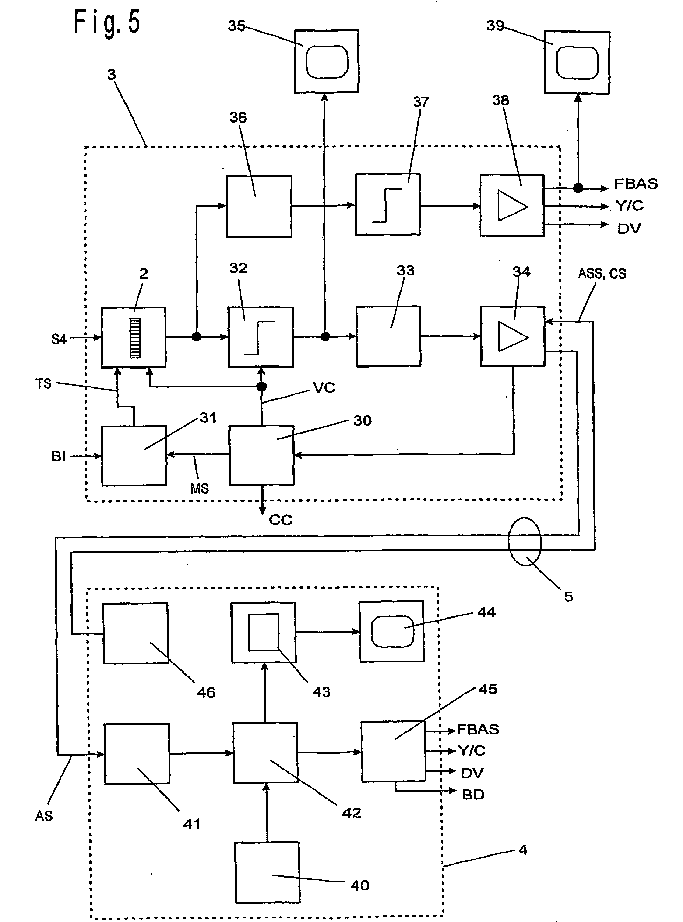

Die Assistelektronik 3 bietet gemäß den Fig. 2 und 5 die Möglichkeit zum Anschluss eines Monitors 35, auf dem die aus den digitalen Assistsignalen zusammengesetzten Assistbilder unmittelbar an der Laufbildkamera betrachtet werden können.

Der Personal Computer 4 weist neben einer Eingabetastatur einen internen oder externen Speicher und einen Monitor, sowie Ausgabeports zur Abgabe eines FBAS-, Y/C- und DV (Digitales Video)-Signals sowie eines Bilddaten enthaltenden Signals BD ab. Das zusammengesetzte Farb-, Bild-, Austast- und Synchronsignal FBAS entsteht durch die Zusammenführung von Luminanz- und Chrominanz-Signal. Das Y/C-Signal entspricht den beiden separat auf eigenen Leitungen übertragenen Anteilen der Luminanz Y und Chrominanz C des gesamten Farbvideosignals. Bei dem DV-Signal handelt es sich um ein digitales Aufzeichnungsformat, wie es in der letzten Zeit bei Consumer-Videorecordern oder Consumer-Camcordern verwendet wird. Es kann auf Geräten, die über entsprechende Eingänge verfügen, aufgezeichnet werden.

Das in Fig. 2 dargestellte Blockschaltbild zeigt den funktionellen Aufbau der Assistelektronik 3 sowie den Bildbearbeitungsteil des Personal Computers 4.

Die üblicherweise im Kamerakopf der Laufbildkamera angeordnete Kamera-Assisteinrichtung enthält den Bildsensor 2, auf den der Assiststrahlengang S4 gemäß Fig. 1 auftrifft, sowie die Assistelektronik 3. Der Ausgang des Bildsensors 2 ist mit einer Bildaufbereitungseinrichtung 32 verbunden, die aus den Ausgangssignalen des Bildsensors 2 ein digitales, farbrichtiges Bild rechnet. Der Ausgang der Bildaufbereitungseinrichtung ist mit einer Bildkomprimierungseinrichtung 33 verbunden, die eine Datenkompression durchführt, um die Menge der zum Personal Computer 4 zu übertragenden Daten gering zu halten. Über Leitungstreiber 34 werden die von der Bildkomprimierungseinrichtung 33 komprimierten Daten in einem computerüblichen Format als eine Serie von Einzelbildern zum Personal Computer 4 übertragen.

Eine Steuereinrichtung 30 stellt eine Verbindung zwischen der Kamerasteuerung und der Kamera-Elektronik 3 her und gibt die in einem Eingabefeld für Betriebseinstellungen 46 des Personal Computers 4 eingegebenen Vorgaben über die Signalverstärkung, die Farbeinstellung, ggf. Einstellungen der Laufbildkamera 1 usw. an den Bildsensor 2 sowie die Bildaufbereitungseinrichtung 32 weiter, die sie als Steuersignale ASS und CS vom Personal Computer 4 über die Leitungstreiber 34 empfängt.

Eine Blendenindex-Signalaufbereitung 31 ist eingangsseitig mit dem Blendenindex-Signal BI, das den Belichtungszyklus der Laufbildkamera 1 repräsentiert, sowie einem Mode-Select-Signal MS vom PC beaufschlagt, das den jeweils gewünschten Belichtungsmodus vorgibt. Ausgangsseitig steuert die Blendenindex-Signalaufbereitung 31 mit einem aufbereiteten Blendenindexsignal das Timing des Bildsensors 2 und die Integrationszeit TI in Abhängigkeit vom Belichtungszyklus der Laufbildkamera 1.

Nach der Bildaufbereitungseinrichtung 32 ist ein Signalausgang vorgesehen auf dem Bilddaten, vorzugsweise im VGA oder XVGA Format auf einen entsprechenden Monitor 35, vorzugsweise einem Flachbildschirm, ausgegeben werden.

Der Bildverarbeitungsteil des Personalcomputers 4 enthält eine Bildspeichereinheit 41, in der die über die Leitungstreiber 34 der Assistelektronik 3 übertragenen digitalen Assistsignale AS als Serie von Einzelbildern in einem computerüblichen Format gespeichert werden. Die Bildspeichereinheit 41 kann beispielsweise aus der Festplatte des Personal Computers 4 bestehen. Der Ausgang der Bildspeichereinheit 41 ist mit einer Bildaufbereitungseinrichtung 42 verbunden, in der die noch komprimierten Daten der Serie von Einzelbildern dekomprimiert und aufbereitet werden. Ein Ausgang der Bildaufbereitungseinrichtung 42 ist mit einer Grafikkarte 43 verbunden, die die Serie von Einzelbildern in eine grafische Darstellung zur Anzeige auf einem Monitor 44 des Personal Computers 4 umsetzt. Die Anzeige der Bilder auf dem Monitor des PC ist hierbei nicht notwendiger weise in Abhängigkeit von der Laufbildkamera. Üblicherweise erfolgt die Anzeige ab hier in der von der Graphikkarte vorgegebenen Frequenz.

Eine Timingsteuerung 40 steuert die Bildaufbereitungseinrichtung 42 an, so dass beispielsweise die aktuell von der Assistelektronik 3 mit den digitalen Assistsignalen AS abgegebene Serie einzelner Assistbilder im Takt bzw. mit dem Timing der Laufbildkamera verarbeitet und zur direkten Ansicht auf dem Monitor 44 gesteuert werden.

Ein weiterer Ausgang der Bildaufbereitungseinrichtung 42 ist mit einer Bildkonvertierungseinrichtung 45 verbunden, die ein FBAS-Signal, Y/C-Signal, DV-Signale sowie Bilddaten an weitere Anzeigeeinrichtungen und/oder Video-Speichereinrichtungen bzw. Videorecorder abgibt. Über eine Vorgabe auf dem PC wird hierbei festgelegt, wie mit unterschiedlichen Filmgeschwindigkeiten verfahren werden soll. In einem ersten Software-Modus werden die Bilder immer wie in echter Aufnahmezeit auf die Videosysteme übergeben, in einem zweiten Modus werden die Bilder immer auf die Filmbelichtungszeit der Laufbildkamera (Screen-Time) bezogen.

Unter der Annahme, dass die Laufbildkamera mit einer Aufnahmegeschwindigkeit von 15 Bildern pro Sekunde läuft, so produziert die Kamera-Assisteinrichtung dementsprechend 15 elektronische (Assist-)Vollbilder pro Sekunde. Um auf ein PAL System zu kommen, das mit 50 Halbbildern pro Sekunde arbeitet, werden aus den angenommenen 15 elektronischen Vollbildern 50 Halbbilder. Aus dem ersten elektronischen Assistbild werden drei Assisthalbbilder, aus dem zweiten elektronischen Bild werden ebenfalls drei Assisthalbbilder und aus dem dritten elektronischen Bild werden vier Assisthalbbilder. Die Videofrequenz gibt dabei ein bestimmtes Zeitraster vor.

Die elektronischen Assistbilder werden so oft als Assisthalbbilder wiederholt, bis ein neues elektronisches Assistbild zur Verfügung steht. Wenn die Laufbildkamera mit einer Aufnahmegeschwindigkeit von mehr als 50 Bildern pro Sekunde läuft, werden entsprechend Assisthalbbilder ausgelassen.

Dem zweiten Modus liegt die Annahme zugrunde, dass die Bilder zwar mit 15 Bildern pro Sekunde mit der Laufbildkamera aufgenommen werden, sie aber in der Wiedergabe mit z. B. 24 Bildern pro Sekunde gezeigt werden sollen, also mit einem Zeitraffer von 24/15tel. Die 15 Bilder würden im Kino also in 15/24 Sekunden, also 0,625 sekunden gezeigt. Dies entspricht 31,25 Videohalbbildem. Nach dem selben Prinzip, nach dem im ersten Modus die 15 elektronischen Bilder in 50 Assisthalbbilder umgesetzt wurden, werden sie nun in 31,25 Assisthalbbilder gewandelt, oder um den Widerspruch der ungeradzahligen Assisthalbbilder aufzulösen, werden aus 60 elektronischen Bildern 125 Assisthalbbilder. Aus dem ersten elektronischen Bild werden zwei Halbbilder, aus dem zweiten elektronischen Bild werden ebenfalls zwei Halbbilder und so weiter, bis zum zwölften elektronischen Bild, aus dem drei Halbbilder werden.

Weiterhin enthält der Personal Computer 4 ein Eingabefeld 46 für Betriebseinstellungen, das die Steuersignale ASS und CS über die Leitungstreiber 34 an die Steuereinrichtung 30 der Assistelektronik 3 zur Vorgabe der Verstärkung, Farbeinstellung und des Belichtungsmodes sowie gegebenenfalls von Einstellungen der Laufbildkamera abgibt. In der Steuereinrichtung 30 werden die über das Eingabefeld 46 des Personal Computers 4 eingegebenen Steuersignale bearbeitet und als Steuersignale VC an den Bildsensor 2 sowie die Bildaufbereitungseinrichtung 32 abgegeben oder über eine entsprechende Schnittstelle als Kamera-Steuersignale CC der Laufbildkamera zur Verfügung gestellt.

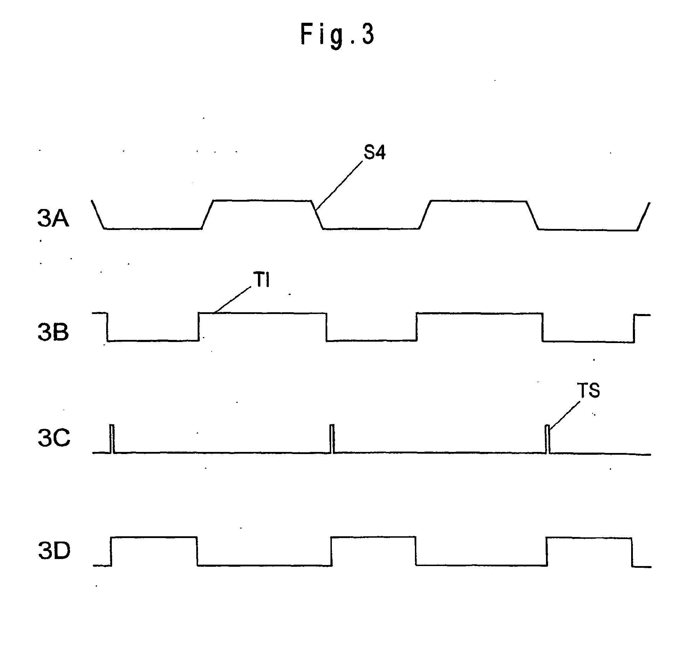

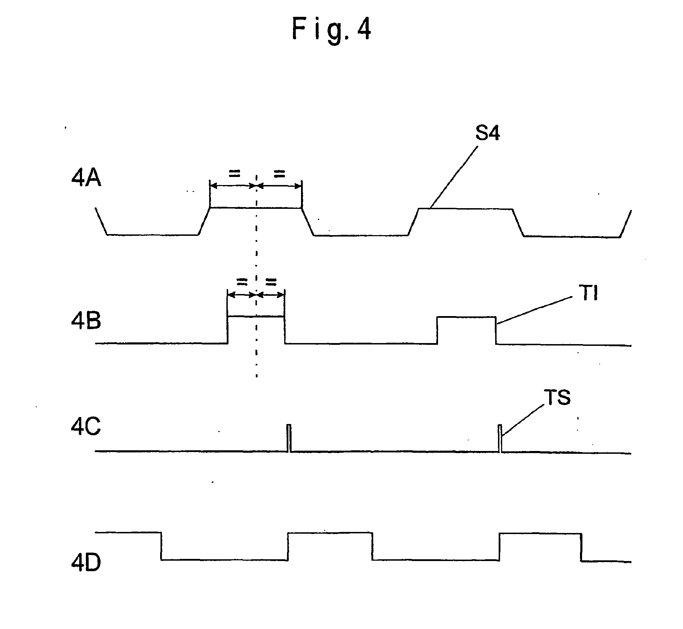

Nachstehend soll die Funktionsweise der Schaltungsanordnung gemäß Fig. 2 anhand der zeitlichen Darstellung einzelner Signale in den Fig. 3 und 4 für zwei unterschiedliche Belichtungsmodi näher erläutert werden.

Der auf den Bildsensor 2 auftreffende Assiststrahlengang S4 wird in elektronische Bildsignale umgewandelt (Fig. 3A und 4A) und gesteuert von der Steuereinrichtung 30 und der Blendenindex-Signalaufbereitung 31 an die Bildaufbereitungseinrichtung 32 abgegeben. Die mit den Blendenindexsignalen BI beaufschlagte Blendenindex-Signalaufbereitung 31 macht die empfangenen Blendenindexsignale über einen Schmitt-Trigger steilflankig und führt eine Phasenverschiebung der empfangenen Blendenindex-Signale BI durch. Dabei ergibt sich die Zeit, während der das vom Assiststrahlengang S4 gemäß Fig. 1 auf den Bildsensor 2 gelangende Licht vom Bildsensor 2 integriert wird, in Abhängigkeit von den Blendenindex-Signalen BI und damit von dem im Assiststrahlengang S4 vorhandenen Licht sowie dem gewählten Belichtungsmodus.

In einem ersten mittels des Mode Select Signals MS einstellbaren Belichtungsmodus wird das auf den Bildsensor 2 gelangende Licht von einer Dunkelphase über den Zeitraum der Hellphase hinweg, in der im Assiststtahlengang S4 Licht vorhanden ist, bis zur nächsten Dunkelphase, in der erneut kein Licht im Assiststrahlengang S4 vorhanden ist, gemäß Fig. 3B integriert. Dieser erste Belichtungsmodus führt damit zu maximal hellen Assistbildern. Dabei ist der Zeitpunkt, zu dem das Integrieren des Lichts durch den Bildsensor 2 beendet und danach sofort wieder begonnen wird, unerheblich, solange dieser Zeitpunkt in der Dunkelphase des Assiststrahlenganges S4 liegt und damit sichergestellt ist, dass kein ungewolltes Licht eines Blendendurchgangs auf den Bildsensor 2 gelangt. Der Bereich des Integrationsendes kann in die Mitte der Dunkelphase des Assiststrahlenganges S4 gelegt werden, was für die Funktion im ersten Belichtungsmodus aber nicht zwingend ist.

In der Praxis wird der Bildsensor 2 in diesem Modus fast immer lichtempfindlich sein. Nur für eine kurze Zeit wird das Auslesen des Bildsensors 2 entsprechend einem Transfer Signal TS gestartet. Nachdem die Information im Bildsensor ausgelesen ist, wird er erneut lichtempfindlich.

Nach Beendigung der Integration des auf den Bildsensor 2 auftreffenden Lichts wird gesteuert durch ein in Fig. 3C dargestelltes Signal die lichtempfindliche Schicht des Bildsensors 2 ausgelesen. Der Start des Auslesens entsprechend dem Transfer-Signal TS kann dabei unmittelbar nach dem Ende der durch das in Fig. 3B dargestellte Signal gesteuerten Integration des Lichts beginnen. Fig. 3D zeigt das vom Bildsensor 2 an die Bildaufbereitungseinrichtung 32 abgegebene Signal der lichtempfindlichen Schicht des Bildsensors 2. Es entspricht der Zeit, in der ein elektronisches Bild aus dem Sensor ausgelesen wird.

Praktisch ist es unerheblich, wie lange das Auslesen der lichtempfindlichen Schicht des Bildsensors 2 dauert. Beim Kopieren der lichtempfindlichen Schicht eines CCD-Chips in dessen Speicherzone vergehen wenige Mikrosekunden, während das Auslesen eines CCD-Chips im Rolling-Curtain-Chutter-Mode mehrere Millisekunden dauert.

Für den Fall, dass bei hohen Filmtransportgeschwindigkeiten und damit großen Bildaufnahmefrequenzen die Zeit für das Auslesen der lichtempfindlichen Schicht des Bildsensors 2 zwischen dem Ende des Lichts im Assiststrahlengang S4 bis zum Beginn der nächsten Periode des in den Assiststrahlengang S4 einfallenden Lichts zu kurz wird, können mehrere Blendendurchläufe der Laufbildkamera 1, d. h. mehrere Perioden des in den Assiststrahlengang S4 einfallenden Lichts zusammengefasst werden.

Nach dem Ende des Auslesens der lichtempfindlichen Schicht des Bildsensors 2 wird der Bildsensor 2 gelöscht bzw. ist in Abhängigkeit von der Bauform des Bildsensors 2 bereits gelöscht. Anschließend kann ein erneutes Integrieren des in den Assiststrahlengang S4 einfallenden Lichts durch den Bildsensor 2 beginnen.

Die Ausgangssignale des Bildsensors 2 werden in Abhängigkeit von dem Belichtungszyklus der Laufbildkamera 1 vom Bildsensor 2 an die Bildaufbereitungseinrichtung 32 abgegeben, wo aus den Ausgangssignalen des Bildsensors 2 ein digitales, farbrichtiges Bild errechnet wird. Bei Ein-Chip-Bildsensoren wird dabei die Farbmaske des Chips decodiert, während bei Bildsensoren mit mehreren Chips die Bilder in an sich bekannter Weise kombiniert werden. Am Ausgang der Bildaufbereitungseinrichtung 32 liegen die digitalen Bilder in computerüblichen Formaten als eine Serie von Einzelbildern vor.

Die von der Bildaufbereitungseinrichtung 32 errechneten einzelnen digitalen Assistbilder werden in der Bildkomprimierung 33 mit einem Datenkompressionsverfahren komprimiert, um die Menge der für die einzelnen digitalen Assistbilder zu übertragenden Daten gering zu halten. Die komprimierten Bilddaten werden über Leitungstreiber 34 zum Personal Computer 4 in Abhängigkeit vom Timing der Laufbildkamera 1 übertragen.

Im Personal Computer 4 werden die komprimierten Bilddaten beispielsweise auf der Festplatte des Personal Computers 4 gespeichert und in der Bildaufbereitungseinrichtung 42 dekomprimiert und aufbereitet. Über die Grafikkarte 43 werden die dekomprimierten und grafisch aufbereiteten Daten auf dem Monitor 44 des Personal Computers 4 angezeigt. Die Dekompression und Aufbereitung der Bilddaten sowie die Umwandlung in der Grafikkarte 43 wird von der Timingsteuerung 40 gesteuert. Dieser Timing Generator ist nicht notwendiger Weise mit der Frequenz der übertragenen Assistbilder gekoppelt. Die übertragenen digitalen Assistbilder, die mit den einzelnen Filmbilder übereinstimmen, können so auf dem Monitor 44 in unterschiedlicher Geschwindigkeit wiedergegeben werden, so dass beispielsweise die Wirkung eines besonderen Aufnahmeeffekts, wie einer Zeitlupe oder eines Zeitraffers realistisch simuliert werden kann.

Bei den in Fig. 4 dargestellten Signalverläufen eines zweiten Belichtungsmodus wird die lichtempfindliche Schicht des Bildsensors 2 erheblich kürzer belichtet, wobei sich die Belichtungszeit nach der jeweils gewünschten bzw. eingestellten Belichtungszeit richtet. Dies wird in der Regel die Belichtungszeit des Laufbildfilms in der Laufbildkamera 1 sein. Wird also die Spiegelblende 11 der Laufbildkamera 1 verkleinert, d. h. der Blendenverstellflügel zurückgeschwenkt, so dass die Spiegelfläche maximal 180° umfasst, um eine bestimmte Bewegungsauflösung zu erhalten, so kann die Kamera-Assisteinrichtung dieser Einstellung der Belichtungszeit des Laufbildfilms 13 folgen und damit eine Beurteilung dieses Effektes real ermöglichen.

Fig. 4A zeigt den Ablauf des im Assiststrahlengang S4 auftretenden Lichts. Anschließend wird wie beschreiben nach einer Phasenverschiebung die für den Bildsensor 2 wirksame Belichtungszeit TI festgelegt. Dabei ist die Belichtungszeit in aller Regel kürzer als Leicht im Assiststrahlengang S4 vorhanden ist.

Prinzipiell ist es zwar unerheblich, wo innerhalb der Hellphase die Belichtungszeit des Bildsensors 2 liegt, in der Praxis ist es aber vorzuziehen, den Mittelpunkt der Belichtungszeit mit der Mitte der Hellphase zusammenfallen zu lassen. Dies verdeutlicht der Signalverlauf gemäß den Fig. 4A und 4B, wo die Integration des Lichts in die Mitte der Hellphase des Assiststrahlengangs S4 gelegt wird.

Der weitere Signalverlauf im zweiten Belichtungsmodus entspricht dem vorstehend anhand der Fig. 3 beschriebenen Verlauf des ersten Belichtungsmodus.

Das in Fig. 5 dargestellte Blockschaltbild zeigt den funktionellen Aufbau einer vorteilhaften Weiterbildung der Assistelektronik 3 sowie den Bildbearbeitungsteil des Personal Computers 4, wobei alle in der Fig. 2 dargestellten Bauelemente in dieser Weiterbildung dieselbe Funktion erfüllen und dementsprechend mit denselben Bezugsziffern versehen sind und parallel zum vorstehend beschriebenen Assistzweig benutzt werden, so dass auf eine erneute Beschreibung an dieser Stelle verzichtet wird.

Unmittelbar nach dem Bildsensor 2, der - wie oben bereits ausgeführt - die Integration des im Assiststrahlengang S4 vorhandenen Lichtes gesteuert von den Hell/Dunkel-Phasen vornimmt, zweigt ein Signalpfad zu einer Speichereinheit 36 ab, die aus einem Verstärker, einem A/D-Wandler, einem Bildspeicher und einem D/A-Wandler besteht. Die Signale des Bildsensors 2 werden gesteuert von den Hell/Dunkel-Phasen im Assiststrahlengang S4 aus dem Bildsensor 2 ausgegeben, verstärkt und in digitale Assistsignale gewandelt. Diese digitalen Assistssignale werden - immer noch in Abhängigkeit von den Hell/Dunkel-Phasen im Assiststrahlengang S4 - in den Bildspeicher eingelesen. Ausgelesen werden die digitalen Assistssignale mit der Frequenz des gewünschten Systems, also mit 50 Vollbildern pro Sekunde bei PAL Systemen und 60 Vollbildern pro Sekunde bei einem NTSC-System.

Nach dem Auslesen werden die digitalen Assistssignale über einen D/A-Wandler zurück in analoge Signale gewandelt und dann mittels einer Videoschaltung, wie sie aus Videokameras bekannt ist, in reguläre Videosignale gewandelt. Die Videoschaltung ist zusammen mit einem Bildinserter, durch den zusätzliche Daten in das Videobild eingeblendet werden können, mit der Bezugsziffer 37 bezeichnet.

Schließlich durchlaufen die Videosignale noch eine Ausgangsstufe 38, um auf üblichen Schnittstellen, z. B. einem 75 Ohm BNC Ausgang für FBAS Signal verwendet werden zu können. Diese Ausgänge, können ebenfalls nochmals für einen kleinen Videomonitor 39 abgezweigt werden, wobei es nicht erheblich ist, welches der Ausgangssignale verwendet wird. Der zusätzliche Videomonitor 39 parallel zu dem Ausgang für den Monitor 35 bietet den Vorteil, dass in der geschilderten Ausführung sowohl reine Videomonitore als auch VGA-Monitore angeschlossen werden können.

Die Kombination der an sich bekannten Ausführung mit analogen Videoausgängen und der erfindungsgemäßen digitalen Signalvariante mit variabler Übertragungsgeschwindigkeit bietet dem Benutzer die Möglichkeit, Szenen, in denen keine Geschwindigkeitseffekte vorkommen, ohne den zusätzlichen Personal Computer 4 anzeigen und aufnehmen zu können. Der Personal Computer 4 wird somit nur dann angeschlossen, wenn es wegen Geschwindigkeitseffekten oder der besseren Qualität der digitalen Bilder notwendig ist.

### Bezugszeichenliste

| | |
|---|---|
| 1 | Laufbildkamera |
| 2 | Optoelektronischer Wandler |
| 3 | Assistelektronik |
| 4 | Personal Computer |
| 5 | Fire-Wire-Schnittstelle |
| 10 | Aufnahmeobjektiv |
| 11 | rotierende Spiegelblende |
| 12 | Bildfenster |
| 13 | Laufbildfilm |
| 14 | Mattscheibe oder Faserplatte |
| 15 | Erster Strahlteiler |
| 16 | Okular |
| 17 | zweiter Strahlteiler |
| 18 | Belichtungsmesser |
| 19 | Assistoptik |
| 30 | Steuereinrichtung |
| 31 | Blendenindex-Signalaufbereitung |
| 32 | Bildaufbereitungseinrichtung |
| 33 | Bildkomprimierungseinrichtung |
| 34 | Leitungstreiber |
| 35 | Monitor |
| 36 | Speichereinheit |
| 37 | Videoschaltung und Bildinserter |
| 38 | Ausgangsstufe |
| 39 | Videomonitor |
| 40 | Timingsteuerung |
| 41 | Bildspeichereinheit |
| 42 | Bildaufbereitungseinrichtung |
| 43 | Grafikkarte |
| 44 | Monitor |
| 45 | Bildkonvertierungseinrichtung |
| S1 | Aufnahmestrahlengang |
| S2 | Strahlenteil |
| S3 | Sucherstrahlengang |
| S4 | Assiststrahlengang |
| S5 | Belichtungsmesser-Strahlengang |
| ABI | aufbereitetes Blendenindexsignal |
| BD | Bilddaten enthaltendes Signal |
| BI | Blendenindex-Signal |
| CC | Kamera-Steuersignale |
| AS | Assiststeuersignal |
| DV | Digitales Video Signal |
| FBAS | Farb-, Bild-, Austast- und Synchronsignal |
| VC | Steuersignal |
| AS | Digitales Assistsignal |
| ASS | Assist-Steuersignal |
| Y/C | Luminanz- und Chrominanz-Signal |

## Patentansprüche

1. Verfahren zum Verarbeiten von aus einem Filmaufnahmestrahlengang (S1) einer Laufbildkamera (1) abgezweigten Filmbildem, die mit einem optoelektronischen Wandler (2), der in einem in Abhängigkeit von der Bildaufnahmefrequenz der Laufbildkamera (1) periodisch unterbrochenen optischen Strahlengang (S4) der Laufbildkamera (1) angeordnet ist, in digitale Assistsignale (AS) umgewandelt werden,
**dadurch gekennzeichnet,**
**dass** die Bildaufnahmefrequenz der Laufbildkamera (1)variabel ist und dass die digitalen Assistsignale (AS) mit einer mit der Bildaufnahmefrequenz der Laufbildkamera (1) übereinstimmenden Bildfrequenz an eine Datenverarbeitungseinrichtung (4) abgegeben werden, die aus den digitalen Assistsignalen (AS) abgeleitete Assistbilder mit der Bildaufnahmefrequenz der Laufbildkamera (1) verarbeitet.

2. Verfahren nach Anspruch 1, **dadurch gekennzeichnet, dass** die Datenverarbeitungseinrichtung (4) die digitalen Assistsignale (AS) zur Anzeige der Assistbilder mit einer Assistbildfrequenz oder der Bildaufnahmefrequenz der Laufbildkamera (1) an eine digitale Speichereinrichtung abgibt.

3. Verfahren nach Anspruch 1, **dadurch gekennzeichnet, dass** die Datenverarbeitungseinrichtung (4) die digitalen Assistsignale (AS) zur Anzeige der Assistbilder mit einer normierten Bildfrequenz, beispielsweise 24 Bilder/s, an einen Monitor (44) abgibt.

4. Verfahren nach mindestens einem der voranstehenden Ansprüche, **dadurch gekennzeichnet, dass** in einem ersten Signalpfad die Videosignale mit einer der Videonorm entsprechenden Videosignalfrequenz über eine genormte Schnittstelle auf übliche Videoschnittstellen gegeben werden.

5. Verfahren nach Anspruch 4, **dadurch gekennzeichnet, dass** in einem zweiten Signalpfad die digitalen Assistsignale (AS) mit einer mit der Bildaufnahmefrequenz der Laufbildkamera (1) übereinstimmenden Signalfrequenz an die Datenverarbeitungseinrichtung (4) abgegeben werden.

6. Verfahren nach mindestens einem der voranstehenden Ansprüche, **dadurch gekennzeichnet, dass** bei einer Bildaufnahmefrequenz der Laufbüdkamera (1), die größer ist als die zu übertragende maximale oder vom optoelektronischen Wandler realisierbare Datenrate, jedes zweite oder vielfache Assistbild an die Datenverarbeitungseinrichtung (4) abgegeben wird.

7. Verfahren nach mindestens einem der voranstehenden Ansprüche, **dadurch gekennzeichnet, dass** von der Datenverarbeitungseinrichtung (4) Assist-Steuersignale (ASS) über die Schnittstelle (5) zur Laufbildkamera (1) übertragen werden.

8. Verfahren nach mindestens einem der voranstehenden Ansprüche, **dadurch gekennzeichnet, dass** von der Laufbildkamera (1) zusätzliche Aufnahme-, Steuer-oder Statussignale (CS) über die Schnittstelle (5) zur Datenverarbeitungseinrichtung (4) übertragen werden.

9. Verfahren nach mindestens einem der voranstehenden Ansprüche, **dadurch gekennzeichnet, dass** auswählbare Steuer-, Status- und/oder Aufnahmedaten als Metadaten in das Assistbild eingeblendet werden.

10. Verfahren nach Anspruch 9, **dadurch gekennzeichnet, dass** die Metadaten außerhalb des Bildbereiches auf einem Monitor angezeigt werden.

11. Verfahren nach mindestens einem der voranstehenden Ansprüche, **dadurch gekennzeichnet, dass** den Lichtverhältnissen im Assiststrahlengang (S4) der Laufbildkamera (1) entsprechende Blendenindexsignale (BI) über eine Blendenindex-Signalaufbereitung (31) an den optoelektronischen Wandler (2) abgegeben werden, der in Abhängigkeit von den aufbereiteten Blendenindexsignalen für seine Integrationszeit (TI) in einem vorgegebenen Belichtungsmodus das Licht im Assiststrahlengang (S4) integriert, und dass die integrierte Lichtmenge nach dem Ende der Integration von einer Bildaufbereitungseinrichtung (32) ausgelesen wird.

12. Verfahren nach Anspruch 11, **dadurch gekennzeichnet, dass** in einem ersten Belichtungsmodus das Licht im Assiststrahlengang (S4) von einer Dunkelphase des Assiststrahlengangs (S4) bis zur nächsten Dunkelphase integriert wird.

13. Verfahren nach Anspruch 11, **dadurch gekennzeichnet, dass** in einem zweiten Belichtungsmodus die Belichtungszeit des optoelektronischen Wandlers (2) auf einen vorgebbaren Wert, vorzugsweise auf die Filmbelichtungszeit der Laufbildkamera (1), eingestellt wird.

14. Verfahren nach Anspruch 12, **dadurch gekennzeichnet, dass** die Belichtungszeit kürzer ist als die Dauer der Hellphase im Assiststrahlengang (S4), dass die Integration in der Hellphase beginnt und endet und dass nach dem Ende der Integration der optoelektronische Wandler (2) ausgelesen wird.

15. Verfahren nach Anspruch 13, **dadurch gekennzeichnet, dass** die Integration in der selben Hellphase beginnt und endet.

16. Verfahren nach einem der voranstehenden Ansprüche 11 bis 15, **dadurch gekennzeichnet, dass** die Mitte der eingestellten Belichtungszeit des optoelektronischen Wandlers (2) auf die Mitte der Hellphase im Assiststrahlengang (S4) eingestellt wird.

17. Verfahren nach einem der voranstehenden Ansprüche 11 bis 16, **dadurch gekennzeichnet, dass** die Bildaufbereitungseinrichtung (32) aus den integrierten Ausgangssignalen des optoelektronischen Wandlers (2) ein digitales Assistbild errechnet, wobei bei einem einzelnen optoelektronischen Wandler (2) die Farbmaske des optoelektronischen Wandlers (2) dekodiert und bei mehreren optoelektronischen Wandlern (2) die digitalen Assistbilder der optoelektronischen Wandler (2) miteinander kombiniert werden und dass die Bildaufbereitungseinrichtung (32) die Bilddaten der digitalen Assistbilder abgibt.

18. Verfahren nach Anspruch 17, **dadurch gekennzeichnet, dass** die Bilddaten der digitalen Assistbilder in einer Bildkomprimierungseinrichtung (33) komprimiert und über Leitungstreiber (34) in Abhängigkeit von der Bildaufnahmefrequenz der Laufbildkamera (1) an die Datenverarbeitungseinrichtung (4) abgegeben werden.

19. Verfahren nach Anspruch 18, **dadurch gekennzeichnet, dass** die Datenverarbeitungseinrichtung (4) die Bilddaten der digitalen Assistbilder speichert, dekomprimiert und zur Anzeige auf einem externen Monitor und/oder einem Monitor (44) der Datenverarbeitungseinrichtung (4) gesteuert von einer Timing-Steuerung (40) aufbereitet.

20. Verfahren nach mindestens einem der voranstehenden Ansprüche, **dadurch gekennzeichnet, dass** über eine Rückleitung (ASS) von der Datenverarbeitungseinrichtung (4) zu einer Kamera-Assisteinrichtung (3) Steuer- und Assistsignale (CS, ASS) an eine Steuereinrichtung (30) der Kamera-Kamera-Assisteinrichtung (3) abgegeben werden, die Steuersignale (VC) an den optoelektronischen Wandler (2) und/oder die Bildaufbereitungseinrichtung (32) abgibt oder über die Schnittstelle (5) als Kamera-Steuersignale (CC) der Laufbildkamera (1) zur Verfügung stellt.

21. Verfahren nach Anspruch 20, **dadurch gekennzeichnet, dass** der Signal- und Datenaustausch zwischen der Kamera-Assisteinrichtung (3) und der Datenverarbeitungseinrichtung (4) binär codiert, insbesondere als PCM-Signal (Pulse Code Modulation) erfolgt

22. Verfahren nach Anspruch 21, **dadurch gekennzeichnet dass** die Signale und Daten kabelgebunden, über Lichtwellenleiter oder Glasfasern, mittels eines Trägerfrequenzsystems oder über eine Infrarotschnittstelle übertragen werden.

23. Vorrichtung zur Durchführung des Verfahrens nach mindestens einem der voranstehenden Ansprüche, **gekennzeichnet durch** eine variable Bildaufnahmefrequenz der Laufbildkamera (1), eine Kamera-Assisteinrichtung (2, 3) mit einem auf den Assiststrahlengang (S4) gerichteten Bildsensor (2) und eine Datenverarbeitungseinrichtung (4), die die von der Kamera-Assisteinrichtung (2, 3) mit einer mit der Bildaufnahmefrequenz der Laufbildkamera (1) übereinstimmenden Bildfrequenz abgegebenen digitalen Assistsignale (AS) empfängt und die aus den digitalen Assistsignalen (AS) zusammengestellten digitalen Assistbilder mit der Bildaufnahmefrequenz der Laufbildkamera (1) verarbeitet.

24. Vorrichtung nach Anspruch 23, **dadurch gekennzeichnet, dass** die Datenverarbeitungseinrichtung (4) mit einer digitalen Speichereinrichtung und/oder einem Monitor verbunden ist.

25. Vorrichtung nach Anspruch 23 oder 24, **dadurch gekennzeichnet, dass** die Datenverarbeitungseinrichtung aus einem Personal Computer (4) besteht und dass der Monitor der Monitor (44) des Personal Computers (4) ist.

26. Vorrichtung nach mindestens einem der voranstehenden Ansprüche 23 bis 25, **dadurch gekennzeichnet, dass** die Kamera-Assisteinrichtung (2, 3) über eine Fire-Wire-Schnittstelle (5) mit dem Personal Computer (4) verbunden ist.

27. Vorrichtung nach mindestens einem der voranstehenden Ansprüche 23 bis 26, **dadurch gekennzeichnet, dass** der im Assiststrahlengang (S4) der Laufbildkamera (1) angeordnete Bildsensor (2) aus einem CCD-Chip, C-MOS-Bildsensor oder einer Bildröhre besteht.

28. Vorrichtung nach Anspruch 27, **dadurch gekennzeichnet, dass** der CCD-Chip oder C-MOS-Bildsensor (2) im Progressive-Scan-Betrieb arbeitet.

29. Vorrichtung nach Anspruch 27, **dadurch gekennzeichnet, dass** der Bildsensor (2) aus einem Interlaced Chip besteht.

30. Vorrichtung nach mindestens einem der voranstehenden Ansprüche 23 bis 29, **dadurch gekennzeichnet, dass** der Personal Computer (4) eine Bedienoberfläche mit Laufbild, Standbild, schnellem Suchlauf vorwärts und rückwärts, sowie Vor- bzw. Rücklauf aufweist.

31. Vorrichtung nach mindestens einem der voranstehenden Ansprüche 23 bis 30, **gekennzeichnet durch** ein Eingabefeld (46) für Betriebseinstellungen, die über graphisch dargestellte Bedienelemente des Personal Computers (4) ausgeführt werden, und an dem Vorgaben über die Signalverstärkung, Farbeinstellung, Einstellungen der Laufbildkamera (1) und dergleichen einstellbar sind.

## Claims

1. Method for processing film images which are deviated from a film-recording optical path (S1) of a moving picture camera (1) and which are converted into digital assist signals (AS) with the aid of an optoelectronic converter (2) which is arranged in the optical path (S4) of the moving picture camera (1) which is periodically interrupted according to the image-recording frequency of the moving picture camera (1),
**characterised in that**
the image recording frequency of the moving picture camera (1) is variable and that the digital assist signals (AS) are sent to a data processing device (4) at an image frequency which coincides with the image-recording frequency of the moving picture camera (1) which the data processing device processes the assist images derived from the digital assist signals (AS) at the image-recording frequency of the moving picture camera (1).

2. Method according to claim 1, **characterised in that** the data processing device (4) sends the digital assist signals (AS) for display of the assist images to a digital storage device at an assist image frequency or the image-recording frequency of the moving picture camera (1)

3. Method according to claim 1, **characterised in that** the data processing device (4) sends the digital assist signals (AS) for display of the assist images to a monitor (44) at a standard image frequency of for example 24 images/s.

4. Method according to at least one of the preceding claims, **characterised in that** in a first signal path the video signals are passed at a video signal frequency corresponding to the video norm through a standard interface to conventional video interfaces.

5. Method according to claim 4, **characterised in that** in a second signal path the digital assist signals (AS) are sent to the data processing device (4) at a signal frequency which coincides with the image-recording frequency of the moving picture camera (1).

6. Method according to at least one of the preceding claims, **characterised in that** in the case of an image-recording frequency of the moving picture camera (1) which is greater than the maximum data rate to be transferred or which can be achieved by the optoelectronic converter, each second or multiple assist image is sent to the data processing device (4).

7. Method according to at least one of the preceding claims, **characterised in that** assist control signals (ASS) are transferred by the data processing device (4) through the interface (5) to the moving picture camera (1).

8. Method according to at least one of the preceding claims, **characterised in that** additional recording, control or status signals (CS) are transferred from the moving picture camera (1) through the interface (5) to the data processing device (4).

9. Method according to at least one of the preceding claims, **characterised in that** selectable control, status and/or recording data are inserted as meta data into the assist image.

10. Method according to claim 9, **characterised in that** the meta data are displayed on a monitor outside of the image zone.

11. Method according to at least one of the preceding claims, **characterised in that** aperture index signals (B1) corresponding to the light conditions in the assist optical path (S4) of the moving picture camera (1) are sent through an aperture index signal (31) unit editing to the optoelectronic converter (2) which in dependence on the edited aperture index signals for its integration time (T1) in a predetermined exposure mode integrates the light in the assist optical path (S4) and that the integrated amount of light is retrieved at the end of integration from an image editing device (32).

12. Method according to claim 11, **characterised in that** in a first exposure mode the light is integrated in the assist optical path (S4) from one dark phase of the assist optical path (S4) up to the next dark phase.

13. Method according to claim 11, **characterised in that** in a second exposure mode the exposure time of the optoelectronic converter (2) is set to a predeterminable value, preferably to the film exposure time of the moving picture camera (1).

14. Method according to claim 12, **characterised in that** the exposure time is shorter than the duration of the light phase in the assist optical path (S4), that the integration starts and ends in the light phase and that the optoelectronic converter (2) is read after the end of integration.

15. Method according to claim 13, **characterised in that** the integration starts and ends in the same light phase.

16. Method according to one of the preceding claims 11 to 15, **characterised in that** the middle of the set exposure time of the optoelectronic converter (2) is set to the middle of the light phase in the assist optical path (S4).

17. Method according to one of the preceding claims 11 to 16, **characterised in that** the image editing device (32) calculates from the integrated output signals of the optoelectronic converter (2) a digital assist image whereby with a single optoelectronic converter (2) the colour mask of the optoelectronic converter (2) is decoded and with several optoelectronic converters (2) the digital assist images of the optoelectronic converter (2) are combined with each other and that the image editing device (32) sends out the image data of the digital assist images.

18. Method according to claim 17, **characterised in that** the image data of the digital assist images are compressed in an image compressing device (33) and are sent to the data processing device (4) through lead drivers (34) in dependence on the image-recording frequency of the moving picture camera (1).

19. Method according to claim 18, **characterised in that** the data processing device (4) stores and decompresses the image data of the digital assist images and edits them for display on an external monitor and/or a monitor (44) of the data processing device (4) controlled by a timing control (40).

20. Method according to at least one of the preceding claims, **characterised in that** through a return lead (ASS) from the data processing device (4) to a camera assist device (3) control and assist signals (CS, ASS) are sent to a control device (30) of the camera-camera-assist device (3) which sends control signals (VC) to the optoelectronic converter (2) and/or image editing device (32) or provides them through the interface (5) as camera control signals (CC) of the moving picture camera (1).

21. Method according to claim 20, **characterised in that** the signal and data exchange between the camera assist device (3) and data processing device (4) takes place binary coded, more particularly as PCM signal (pulse code modulation).

22. Method according to claim 21, **characterised in that** the signals and data are transferred cable-linked, through light wave conductors or glass fibres, by means of a carrier frequency system or through an infra red interface.

23. Apparatus for carrying out the method according to at least one of the preceding claims, **characterised by** a variable image-recording frequency of the moving picture camera (1), a camera assist device (2, 3) with an image sensor (2) directed to the assist optical path (S4), and a data processing unit (4) which receives the digital assist signals (AS) sent from the camera assist device (2, 3) at an image frequency which coincides with the image-recording frequency of the moving picture camera (1) and which processes the digital assist images assembled from the digital assist signals (AS) at the image-recording frequency of the moving picture camera (1).

24. Device according to claim 23, **characterised in that** the data processing device (4) is connected to a digital storage device and/or monitor.

25. Device according to claim 23 or 24, **characterised in that** the data processing device consists of a personal computer (4) and that the monitor is the monitor (44) of the personal computer.

26. Device according to at least one of the preceding claims 23 to 25, **characterised in that** the camera- -assist device (2,3) is connected to the personal computer (4) through a fire-wire interface (5).

27. Device according to at least one of the preceding claims 23 to 26, **characterised in that** the image sensor (2) mounted in the assist optical path (S4) of the moving picture camera (1) consists of a CCD chip, C-MOS- image sensor or image tubes.

28. Device according to claim 27, **characterised in that** the CCD chip or CVMOS image sensor (2) operates in the progressive scan operation.

29. Device according to claim 27, **characterised in that** the image sensor (2) consists of an interlaced chip.

30. Device according to at least one of the preceding claims 23 to 29, **characterised in that** the personal computer (4) has an operating surface with moving picture, stationary picture, fast search forwards and backwards as well as a forward and return.

31. Device according to at least one of the preceding claims 23 to 30, **characterised by** an input field (46) for operating settings which are executed through graphically displayed operating elements of the personal computer (4) and at which guidelines can be set on the signal intensification, colour setting, settings of the moving picture camera (1) and the like.

## Revendications

1. Procédé de traitement d'images cinématographiques dérivées du trajet du faisceau d'enregistrement cinématographique (S1) d'une caméra de prise de vue (1), lesdites images étant converties en signaux auxiliaires numériques (AS) à l'aide d'un convertisseur optoélectronique (2) qui est disposé sur un trajet du faisceau optique (S4) de la caméra de prise de vue (1), ledit trajet étant interrompu périodiquement en fonction de la fréquence d'enregistrement d'image de la caméra de prise de vue (1),
**caractérisé en ce que**
la fréquence d'enregistrement d'image de la caméra de prise de vue (1) est variable, et **en ce que** les signaux auxiliaires numériques (AS) sont délivrés, à une fréquence d'image, coïncidant avec la fréquence d'enregistrement d'image de la caméra de prise de vue (1), à un dispositif de traitement de données (4) qui traite des images auxiliaires dérivées des signaux auxiliaires numériques (AS) à la fréquence d'enregistrement d'image de la caméra de prise de vue (1).

2. Procédé selon la revendication 1, **caractérisé en ce que** le dispositif de traitement de données (4) délivre les signaux auxiliaires numériques (AS), pour afficher les images auxiliaires, à une fréquence d'image auxiliaire ou à la fréquence d'enregistrement d'image de la caméra de prise de vue (1), à un dispositif de stockage numérique.

3. Procédé selon la revendication 1, **caractérisé en ce que** le dispositif de traitement de données (4) délivre les signaux auxiliaires numériques (AS) pour afficher les images auxiliaires à une fréquence d'image normalisée, par exemple de 24 images/s, à un moniteur (44).

4. Procédé selon au moins une des revendications précédentes, **caractérisé en ce que** sur un premier trajet de signal, les signaux vidéo sont amenés, à une fréquence de signal vidéo correspondant à la norme vidéo, par l'intermédiaire d'une interface normalisée à des interfaces vidéo usuelles.

5. Procédé selon la revendication 4, **caractérisé en ce que** sur un deuxième trajet de signal, les signaux auxiliaires numériques (AS) sont délivrés, à une fréquence de signal coïncidant avec la fréquence d'enregistrement d'image de la caméra de prise de vue (1), au dispositif de traitement de données (4).

6. Procédé selon au moins une des revendications précédentes, **caractérisé en ce qu'**à une fréquence d'enregistrement d'image de la caméra de prise de vue (1) qui est supérieure au débit de données maximal à transmettre ou réalisable par le convertisseur optoélectronique, une image auxiliaire sur deux, ou multiple, est délivrée au dispositif de traitement de données (4).

7. Procédé selon au moins une des revendications précédentes, **caractérisé en ce que** le dispositif de traitement de données (4) transmet des signaux de commande auxiliaires (ASS) à la caméra de prise de vue (1) par l'interface (5).

8. Procédé selon au moins une des revendications précédentes, **caractérisé en ce que** la caméra de prise de vue (1) transmet des signaux supplémentaires d'enregistrement, de commande ou d'état (CS) au dispositif de traitement de données (4) par l'interface (5).

9. Procédé selon au moins une des revendications précédentes, **caractérisé en ce que** des données sélectionnables de commande, d'état et/ou d'enregistrement sont incrustées comme des métadonnées dans l'image auxiliaire.

10. Procédé selon la revendication 9, **caractérisé en ce que** les métadonnées sont affichées en dehors de la zone d'image sur un moniteur.

11. Procédé selon au moins une des revendications précédentes, **caractérisé en ce que** des signaux d'indice de diaphragme (BI) correspondant aux conditions de lumière sur la trajectoire du faisceau auxiliaire (S4) de la caméra de prise de vue (1) sont délivrés, par l'intermédiaire d'un dispositif de conditionnement de signal d'indice de diaphragme (31), au convertisseur optoélectronique (2) qui, en fonction des signaux d'indice de diaphragme conditionnés, intègre pour son temps d'intégration (TI) dans un mode d'exposition prédéfini la lumière sur la trajectoire du faisceau auxiliaire (S4), et **en ce que** la quantité de lumière intégrée est extraite à l'issue de l'intégration par un dispositif d'édition d'image (32).

12. Procédé selon la revendication 11, **caractérisé en ce que** dans un premier mode d'exposition, la lumière sur la trajectoire du faisceau auxiliaire (S4) est intégrée d'une phase sombre de la trajectoire du faisceau auxiliaire (S4) à la phase sombre suivante.

13. Procédé selon la revendication 11, **caractérisé en ce que** dans un deuxième mode d'exposition, le temps d'exposition du convertisseur optoélectronique (2) est réglé sur une valeur prédéfinissable, de préférence sur le temps d'exposition de pellicule de la caméra de prise de vue (1).

14. Procédé selon la revendication 12, **caractérisé en ce que** le temps d'exposition est plus court que la durée de la phase claire sur la trajectoire du faisceau auxiliaire (S4), **en ce que** l'intégration commence et finit dans la phase claire et **en ce qu'**à l'issue de l'intégration, le convertisseur optoélectronique (2) est lu.

15. Procédé selon la revendication 13, **caractérisé en ce que** l'intégration commence et finit dans la même phase claire.

16. Procédé selon l'une quelconque des revendications précédentes 11 à 15, **caractérisé en ce que** le milieu du temps d'exposition réglé du convertisseur optoélectronique (2) est réglé sur le milieu de la phase claire sur la trajectoire du faisceau auxiliaire (S4).

17. Procédé selon l'une quelconque des revendications 11 à 16, **caractérisé en ce que** le dispositif d'édition d'image (32) calcule à partir des signaux de sortie intégrés du convertisseur optoélectronique (2) une image auxiliaire numérique, dans lequel pour un seul convertisseur optoélectronique (2), le masque de couleurs du convertisseur optoélectronique (2) est décodé, et pour plusieurs convertisseurs optoélectroniques (2), les images auxiliaires numériques des convertisseurs optoélectroniques (2) sont combinées ensemble, et **en ce que** le dispositif d'édition d'image (32) délivre les données d'image des images auxiliaires.

18. Procédé selon la revendication 17, **caractérisé en ce que** les données d'image des images auxiliaires numériques sont comprimées dans un dispositif de compression d'image (33) et sont délivrées au dispositif de traitement de données (4) par l'intermédiaire de circuits d'attaque de ligne (34) en fonction de la fréquence d'enregistrement d'image de la caméra de prise de vue (1).

19. Procédé selon la revendication 18, **caractérisé en ce que** le dispositif de traitement de données (4) mémorise les données d'image des images auxiliaires numériques, les décomprime et les édite pour l'affichage sur un moniteur externe et/ou un moniteur (44) du dispositif de traitement de données (4), sous le contrôle d'une commande de synchronisation (40).

20. Procédé selon au moins une des revendications précédentes, **caractérisé en ce que** par l'intermédiaire d'une ligne de retour (ASS) allant du dispositif de traitement de données (4) à un dispositif auxiliaire de caméra (3), des signaux de commande et auxiliaires (CS, ASS) sont délivrés à un dispositif de commande (30) du dispositif auxiliaire caméra-caméra (3) qui délivre des signaux de commande (VC) au convertisseur optoélectronique (2) et/ou au dispositif d'édition d'image (32) ou les fournit à la caméra de prise de vue (1) par l'intermédiaire de l'interface (5) comme des signaux de commande de caméra (CC).

21. Procédé selon la revendication 20, **caractérisé en ce que** l'échange de signaux et de données entre le dispositif auxiliaire de caméra (3) et le dispositif de traitement de données (4) s'effectue sous codage binaire, en particulier sous forme de signal PCM (« pulse code modulation »).

22. Procédé selon la revendication 21, **caractérisé en ce que** les signaux et les données sont transmis par fil, par des guides d'ondes optiques ou des fibres de verre, au moyen d'un système à fréquence porteuse ou par une interface infrarouge.

23. Dispositif pour réaliser le procédé selon au moins une des revendications précédentes, **caractérisé par** une fréquence d'enregistrement d'image variable de la caméra de prise de vue (1), un dispositif auxiliaire de caméra (2, 3) avec un capteur d'image (2) tourné vers la trajectoire du faisceau auxiliaire (S4) et un dispositif de traitement de données (4) qui reçoit les signaux auxiliaires numériques (AS) délivrés par le dispositif auxiliaire de caméra (2, 3) à une fréquence d'image coïncidant avec la fréquence d'enregistrement d'image de la caméra de prise de vue (1) et traite les images auxiliaires numériques composées à partir des signaux auxiliaires numériques (AS) à la fréquence d'enregistrement d'image de la caméra de prise de vue (1).

24. Dispositif selon la revendication 23, **caractérisé en ce que** le dispositif de traitement de données (4) est relié à un dispositif de stockage numérique et/ou à un moniteur.

25. Dispositif selon la revendication 23 ou 24, **caractérisé en ce que** le dispositif de traitement de données se compose d'un ordinateur individuel (4) et **en ce que** le moniteur est le moniteur (44) de l'ordinateur individuel (4).

26. Dispositif selon au moins une des revendications précédentes 23 à 25, **caractérisé en ce que** le dispositif auxiliaire de caméra (2, 3) est relié à l'ordinateur individuel (4) par une interface FireWire (5).

27. Dispositif selon au moins une des revendications précédentes 23 à 26, **caractérisé en ce que** le capteur d'image (2) disposé sur la trajectoire du faisceau auxiliaire (S4) de la caméra de prise de vue (1) se compose d'une puce CCD, d'un capteur d'image CMOS ou d'un tube cathodique.

28. Dispositif selon la revendication 27, **caractérisé en ce que** la puce CCD ou le capteur d'image CMOS (2) fonctionne en mode balayage progressif.

29. Dispositif selon la revendication 27, **caractérisé en ce que** le capteur d'image (2) se compose d'une puce à entrelacement.

30. Dispositif selon au moins une des revendications précédentes 23 à 29, **caractérisé en ce que** l'ordinateur individuel (4) présente une interface utilisateur avec image animée, image fixe, recherche accélérée avant et arrière, ainsi qu'avec avance et retour.

31. Dispositif selon au moins une des revendications précédentes 23 à 30, **caractérisé par** un champ d'entrée (46) pour des réglages opérationnels qui sont effectués par des éléments de commande, représentés de façon graphique, de l'ordinateur individuel (4), et qui permet de régler des valeurs par défaut concernant l'amplification de signal, le réglage des couleurs, des réglages de la caméra de prise de vue (1) et similaires.
